# EUROPÄISCHE PATENTSCHRIFT

(11) **EP 0 842 472 B1**
(45) Veröffentlichungstag und Bekanntmachung des Hinweises auf die Patenterteilung: **26.05.1999**
(21) Anmeldenummer: 96928333.2
(22) Anmeldetag: 25.07.1996
(51) Int. Cl.: G06F 13/362

(54) **VERFAHREN ZUM BETREIBEN EINES DATENÜBERTRAGUNGSSYSTEMS**
METHOD OF OPERATING A DATA TRANSMISSION SYSTEM
PROCEDE D'EXPLOITATION D'UN SYSTEME DE TRANSFERT DE DONNEES

(30) Priorität: 02.08.1995 DE 19528437
(43) Veröffentlichungstag der Anmeldung: 20.05.1998
(73) Patentinhaber: SIEMENS AKTIENGESELLSCHAFT, 80333 München (DE)
(72) Erfinder: BÜHLER, Reiner, D-76703 Kraichtal (DE); DÖBRICH, Udo, D-76307 Karlsbad (DE)
(86) Internationale Anmeldenummer: DE9601390
(87) Internationale Veröffentlichungsnummer: WO9705552

(56) Entgegenhaltungen:
- EP-A- 0 133 567
- DE-A- 4 009 685
- US-A- 4 481 572
- IBM TECHNICAL DISCLOSURE BULLETIN, Bd. 37, Nr. 8, August 1994, NEW YORK, US, Seiten 207-213, XP000456391 "Time-clustered access for maximising bandwidth utilisation via windows of asynchronous arrival"

## Beschreibung

Die Erfindung betrifft ein Verfahren zum Betreiben eines Datenübertragungssystems nach dem Oberbegriff des Anspruchs 1.

Ein derartiges Verfahren zum Betreiben eines Datenübertragungssystems ist bereits aus der DE-OS 42 13 792 bekannt. Durch ein dort als Summenrahmentelegramm (COP) bezeichnetes Aufruftelegramm eines Teilnehmers, der sich im Besitz des Buszugriffsrechts befindet, werden mehrere Daten für jeweils verschiedene andere Teilnehmer übertragen. Die anderen Teilnehmer, die durch das Summenrahmentelegramm zur Übertragung eines Antworttelegramms aufgefordert worden sind, senden nacheinander in einer vorbestimmten Reihenfolge ihre Antworttelegramme jeweils in Zeitschlitzen fester Dauer auf die Busleitung. Als Möglichkeiten zur Festlegung dieser Reihenfolge sind eine Hardware-Codierung durch den Anwender bei der Inbetriebnahme, eine Parametrierung in der Initialisierungsphase oder eine Festlegung in Abhängigkeit von den Teilnehmeradressen genannt. Als eine mit geringem Aufwand realisierbare Variante ist die direkte Abbildung der Teilnehmeradressen auf die Zeitschlitznummern hervorgehoben, so daß der Zeitschlitz, beginnend zum Zeitpunkt tl, dem Teilnehmer mit der Adresse 1, der Zeitschlitz bei t2 demjenigen mit der Adresse 2 usw. zugeordnet wird. Das bekannte Verfahren bewirkt bereits eine Verbesserung der Übertragungsgeschwindigkeit, es stellt jedoch noch keine optimale Lösung dar.

Aus der EP-A-0 133 567 ist ein Datenübertragungssystem bekannt, bei dem die von einer Zentraleinheit angerufenen Teilnehmer derart parametriert werden, daß sie das Anruftelegramm zeitlich aufeinanderfolgend beantworten. Bei der Parametrierung werden die Laufzeiten zwischen der Zentraleinheit und den einzelnen Teilnehmern (und zurück) berücksichtigt. Nicht berücksichtigt werden dagegen die tatsächlichen Reaktionszeiten der Teilnehmer, die hauptsächlich von deren inneren Bearbeitungszeiten abhängig sind.

Der Erfindung liegt die Aufgabe zugrunde, ein Verfahren zum Betreiben eines Datenübertragungssystems zu finden, mit dem die Übertragungsgeschwindigkeit weiter erhöht wird.

Zur Lösung dieser Aufgabe ist bei dem neuen Verfahren der eingangs genannten Art das im kennzeichnenden Teil des Anspruchs 1 angegebene Merkmal vorgesehen. In den Unteransprüchen sind vorteilhafte Weiterbildungen der Erfindung beschrieben.

Die Erfindung hat den Vorteil, daß die Reihenfolge der antwortenden Teilnehmer zeitoptimal festgelegt ist. Es kann beispielsweise nicht vorkommen, daß ein Teilnehmer mit sehr kurzer Reaktionszeit aufgrund einer hohen Teilnehmeradresse zur Übertragung seiner Daten abwarten muß, bis langsame Teilnehmer reagiert und ihre Daten übertragen haben. Da häufig die eigentlichen Übertragungszeiten im Vergleich zur internen Bearbeitungszeit eines Aufruftelegramms durch den aufgerufenen Teilnehmer gering sind, wird durch die Erfindung die für eine Bearbeitung eines Aufruftelegramms an mehrere andere Teilnehmer erforderliche Zeit von der Reaktionszeit des langsamsten Teilnehmers bestimmt. Dabei kann in dem aufruf enden Teilnehmer das Auftreten keines, eines oder mehrerer Antworttelegramme, die nacheinander oder zeitlich überlappend eintreffen, beherrscht werden. Es wird ein Verfahren angegeben, mit dem in Bussystemen ein Teilnehmer Daten von einem oder mehreren Teilnehmern gleichzeitig sammeln, ein Teilnehmer Daten an einen oder mehrere Teilnehmer gleichzeitig verteilen, ein Teilnehmer Daten an einen oder mehrere Teilnehmer gleichzeitig verteilen und Daten von diesen Teilnehmern sammeln, ein Teilnehmer das Vorhandensein anderer Teilnehmer ermitteln und ein Teilnehmer bestimmte Eigenschaften anderer Teilnehmer abfragen kann. Darüber hinaus sind weitere Anwendungen des Verfahrens denkbar und möglich. Der Ausdruck "mehrere Teilnehmer" bezeichnet eine Gruppe aus mindestens zwei und maximal allen anderen angeschlossenen Teilnehmern.

Anhand der Zeichnungen, in denen Ausführungsbeispiele der Erfindung dargestellt sind, werden im folgenden die Erfindung sowie Ausgestaltungen und Vorteile näher erläutert.
- Figur 1: zeigt den zeitlichen Ablauf einer Übertragung mit nacheinander eintreffenden Antworttelegrammen,
- Figur 2: einen Ablauf mit überlappenden Antworttelegrammen.

In den beiden Zeichnungen sind die Positionen von Teilnehmern 1 ... 4 durch senkrechte Linien und die Übertragungsrichtungen und Zeitpunkte von Telegrammen durch Pfeile neben einer senkrechten Zeitachse t dargestellt.

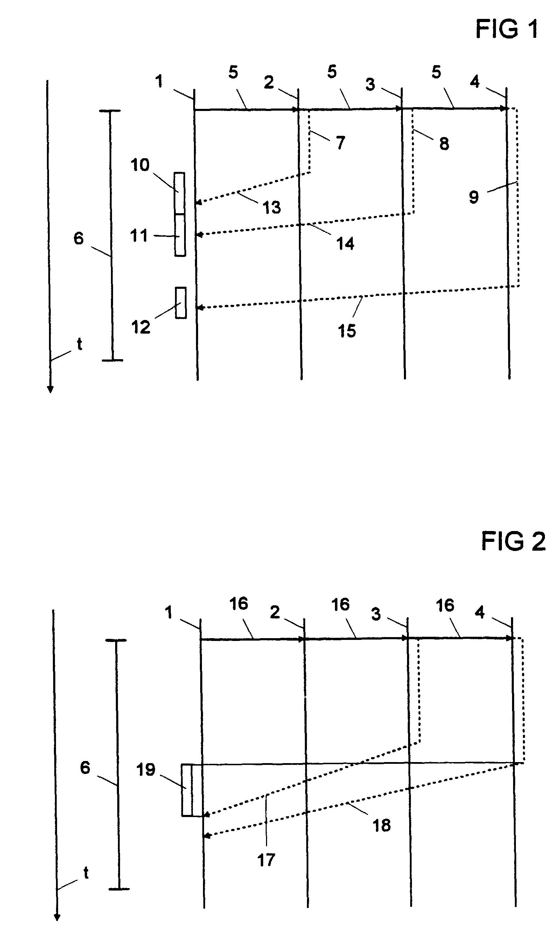

In Figur 1 adressiert ein aufrufender Teilnehmer 1 ein Aufruftelegramm 5 an mehrere andere Teilnehmer 2, 3 und 4, das etwa gleichzeitig bei diesen eintrifft. Es fühlen sich nur diejenigen Teilnehmer angesprochen, die ein bestimmtes Auswahlkriterium, das später näher erläutert wird, erfüllen. Folgende für den aufrufenden Teilnehmer 1 feststellbare Reaktionen auf das Aufruftelegramm 5 sind prinzipiell möglich:
- Kein Antworttelegramm innerhalb einer vorgegebenen Wartezeit 6,
- Antworttelegramm von einem Teilnehmer innerhalb der vorgegebenen Wartezeit 6 und
- Antworttelegramme von mehreren, eventuell allen aufgerufenen Teilnehmern 2, 3 oder 4 innerhalb der vorgegebenen Wartezeit 6.

Welche dieser Fälle Gut- bzw. Schlecht-Fälle darstellen und wie eventuell eingetroffene Antworten zu interpretieren und auszuwerten sind, hängt von der jeweiligen Anwendung ab. Wenn die Möglichkeit mindestens einer Antwort besteht, beginnt beim aufruf enden Teilnehmer 1 die Wartezeit 6 zu laufen, die so bemessen ist, daß die aufgerufenen Teilnehmer 2 ... 4 bei fehlerlosem Betrieb innerhalb dieser Wartezeit 6 antworten können. Treffen eine oder mehrere Antworten erst nach Ablauf dieser Wartezeit 6 ein, so wird dies als fehlerhaftes Verhalten der betreffenden Teilnehmer 2, 3 oder 4 aufgefaßt.

Das Verfahren kann im Datenzugriffsprotokoll (Schicht 2 des 7-Schichten-Modells) der einzelnen Teilnehmer oder in der Anwendung (in den Schichten 3 ... 7) abgewickelt werden. Die Reaktion auf das Eintreffen von Aufruf- oder Antworttelegrammen muß im konkreten Einzelfall nach den jeweiligen Bedürfnissen festgelegt werden. Beim aufrufenden Teilnehmer erfolgt die Reaktion erst nach Ablauf der beschriebenen Wartezeit 6, auch wenn der Grund dafür schon früher vorliegt. Wenn z. B. das Verfahren ganz im Datenzugriffsprotokoll abgewickelt wird, kann eine Anforderung des Anwenders den Ablauf anstoßen, und nach der Wartezeit 6 kann als Bestätigung eine Reaktion an den Anwender erfolgen. Auch der Anstoß muß nicht unbedingt vom Anwender kommen.

Das Aufruftelegramm 5 beinhaltet mindestens die folgenden Teile:
- Quelladresse (Busadresse des aufrufenden Teilnehmers) und
- Zieladresse (z. B. Globaladresse zur Adressierung aller angeschlossenen Teilnehmer).

Optional können die folgenden weiteren Komponenten vorhanden sein:
- Auswahlkriterium,
- Ausführungsvorschrift und
- Daten.

Das Auswahlkriterium dient zur Selektion der angesprochenen Teilnehmer. Es bestimmt, ob ein einzelner Teilnehmer, eine Gruppe von Teilnehmern oder alle Teilnehmer angesprochen werden und gegebenenfalls aus welchen Teilnehmern sich eine Gruppe zusammensetzt. Ein Auswahlkriterium kann z. B. eine Kennung für einen bestimmten Zugangskanal im Teilnehmer sein, ähnlich einem LSAP (Link Service Access Point) des PROFIBUS, der dort für Multicast-Telegramme verwendet wird. Dann sind alle Teilnehmer angesprochen, bei denen auf diesem Zugangskanal die geforderte Funktion aktiviert ist. Das Auswahlkriterium ist im Aufruftelegramm 5 optional. Wenn es nicht mitgesendet wird, muß es den Teilnehmern 2, 3 und 4 auf andere Weise bekannt sein, z. B. durch implizite Festlegung.

Die Ausführungsvorschrift dient der Mitteilung der gewünschten Reaktion an die aufgerufenen Teilnehmer. Beispiele für Ausführungsvorschriften sind:
- Daten von mehreren Teilnehmern sammeln,
- Daten an mehrere andere Teilnehmer übermitteln,
- Daten mehrerer Teilnehmer sammeln und an diese übermitteln,
- Teilnehmerabbild erstellen und
- Test.

Diese Aufzählung kann durch weitere Ausführungsvorschriften erweitert werden. Auch Kombinationen von bereits definierten Vorschriften sind möglich.

Die Ausführungsvorschrift muß nicht im Aufruftelegramm 5 mitgesendet werden. Sie kann den aufgerufenen Teilnehmern 2, 3 und 4 auch auf andere Weise bekannt sein, z. B. durch implizite Beschränkung auf nur eine bestimmte Vorschrift oder wenn die Vorschrift vom Auswahlkriterium oder vom Zustand der Teilnehmer abhängig ist.

Die übertragenen Daten können reine Anwenderdaten sein oder auch Komponenten enthalten, welche zur Realisierung des beschriebenen Verfahrens beitragen. Sie sind optional, z. B. werden bei der ersten angeführten Ausführungsvorschrift keine Daten im Aufruftelegramm übertragen.

Das Verfahren wird nach dem Prinzip "Immediate Response" durchgeführt, d. h., zwischen Aufruftelegramm und Antworttelegrammen oder dem Ablauf der Wartezeit 6 findet kein anderer Verkehr auf dem Bus statt. Daher kann die erforderliche Wartezeit 6 berechnet werden, wenn die Reaktionszeiten der aufgerufenen Teilnehmer 2, 3 und 4 sowie die Übertragungszeiten der Antworttelegramme bekannt sind. Wiederholungen der Telegrammübertragungen sind, z. B. wegen Übertragungsfehlern, möglich.

Die Reaktionszeiten der aufgerufenen Teilnehmer 2, 3 und 4 sind in Figur 1 durch senkrechte, punktierte Linien 7, 8 bzw. 9 angedeutet. Die Antworten verschiedener aufgerufener Teilnehmer erscheinen nacheinander auf dem Bus. Dies wird dadurch erreicht, daß für jeden aufgerufenen Teilnehmer 2, 3 oder 4 ein Zeitfenster 10, 11 bzw. 12 vorgegeben wird, in dem er antworten darf. Lücken zwischen den Zeitfenstern 10, 11 und 12 sind zulässig, sie sollten sich jedoch nicht überlappen. Jeder aufgerufene Teilnehmer 2, 3 und 4 muß sein eigenes Zeitfenster 10, 11 bzw. 12 kennen, jedoch nicht die Zeitfenster anderer aufgerufener Teilnehmer. Außerhalb des jeweiligen zugeteilten Zeitfensters darf keiner der aufgerufenen Teilnehmer antworten. Der aufrufende Teilnehmer 1 muß nicht die einzelnen Zeitfenster 10, 11 oder 12 kennen, jedoch die Wartezeit 6 für Antworten 13, 14 und 15, die groß genug sein muß, um allen aufgerufenen Teilnehmern innerhalb dieser Zeit eine Antwort zu ermöglichen. In dem aufrufenden Teilnehmer 1 kann auch eine Liste mit den aufgerufenen Teilnehmern 2, 3 und 4 geführt werden, z. B. um zu prüfen, ob alle aufgerufenen Teilnehmer geantwortet haben.

Die Zeitfenster 10, 11 und 12 müssen für den Einzelfall konfiguriert und aufeinander abgestimmt werden. Dabei sind die Reaktionszeiten 7, 8 und 9 sowie die Übertragungszeiten der Antworttelegramme 13, 14 und 15 zu berücksichtigen. Im allgemeinen sind sie so zu wählen, daß sich die Antworttelegramme nicht überlappen können. Die Reihenfolge der Zeitfenster 10, 11 und 12 wird durch die Reaktionszeiten 7, 8 bzw. 9 der aufgerufenen Teilnehmer 2, 3 bzw. 4 bestinmt, denen sie zugeordnet sind. Demjenigen aufgerufenen Teilnehmer, der die kürzeste Reaktionszeit hat, in diesem Fall der Teilnehmer 2, wird das erste Zeitfenster, hier das Zeitfenster 10, zugeordnet. Für die Ermittlung der einzelnen Reaktionszeiten gibt es mehrere Möglichkeiten. Sie kann z. B. in jedem Teilnehmer 1 ... 4 fest hinterlegt sein und in einer Initialisierungsphase durch den aufrufenden Teilnehmer 1 oder einen Konfigurator ausgelesen werden. Weiterhin ist es möglich, durch Aufruftelegramme an einzelne Teilnehmer deren Reaktionszeiten zu bestimmen. Mit diesen Informationen und der Busübertragungszeit kann die Lage der jeweiligen Zeitfenster leicht ermittelt und an die aufgerufenen Teilnehmer 2, 3 und 4 übertragen werden.

Wenn mit einem Aufruftelegramm lediglich Daten an mehrere Teilnehmer gleichzeitig verteilt werden sollen, sind die betreffenden Daten im Aufruftelegramm 5 enthalten, deren Erhalt mit Antworttelegrammen 13, 14 und 15, die keine Daten enthalten, der aufgerufenen Teilnehmer 2, 3 bzw. 4 quittiert wird.

Zum Sammeln von Daten sendet der aufrufende Teilnehmer 1 an die anderen Teilnehmer 2, 3 und 4 eine Aufforderung, Daten zurückzugeben, und erhält die gewünschten Daten in den Antworttelegrammen 13, 14 bzw. 15. Dabei müssen die Antworttelegramme nacheinander in den jeweiligen Zeitfenstern 10, 11 bzw. 12 eintreffen, damit sie sich nicht gegenseitig stören. Eine sequentielle Abfrage einzelner Teilnehmer ist nicht erforderlich. Es genügt ein Aufruftelegramm 1, um mehrere Teilnehmer abzufragen.

Wenn durch den aufrufenden Teilnehmer 1 sowohl Daten verteilt als auch gesammelt werden sollen, sind im Aufruftelegramm 5 wie auch in den Antworttelegrammen 13, 14 und 15 die jeweiligen Daten enthalten.

Zum Test auf bestimmte Teilnehmereigenschaften oder -merkmale sendet der Teilnehmer 1 gemäß Figur 2 ein Suchaufruftelegramm 16 an alle anderen Teilnehmer 2, 3 und 4, das als Daten eventuell eine Angabe des gesuchten Teilnehmermerkmals enthält. Damit können die Teilnehmer auf Merkmale, z. B. Busadresse, Seriennummer, Vorhandensein einer bestimmten Funktionalität, Hersteller, überprüft werden. Alle Teilnehmer, die dieses Merkmal besitzen, antworten auf das Suchaufruftelegramm 16. Die Antworten können nacheinander oder überlappend eintreffen, je nach Art des Suchaufrufs. Wenn der aufrufende Teilnehmer 1 z. B. wissen will, ob kein, ein oder mehrere Teilnehmer eine geforderte Eigenschaft besitzen, z. B. zur Prüfung auf mehrfache Existenz derselben Busadresse, können die Antworten überlappend sein. Dies ist in Figur 2 für Antworttelegramme 17 und 18 mit einem Überlappungsbereich 19 verdeutlicht.

Wenn der aufrufende Teilnehmer 1 z. B. wissen will, wieviele Teilnehmer am Bus mit einer bestimmten Eigenschaft vorhanden sind, beispielsweise zur Prüfung auf einen bestimmten Hersteller, müssen die aufgerufenen Teilnehmer 2, 3 und 4 in den zugeordneten Zeitfenstern 10, 11 bzw. 12 gemäß Figur 1 ihre Antworttelegramme 13, 14 bzw. 15 übertragen, damit die Anzahl der Antworten eindeutig ermittelt werden kann.

Zur Erstellung eines aktuellen Teilnehmerabbilds sendet der aufrufende Teilnehmer 1 gemäß Figur 1 an alle übrigen Teilnehmer ein Aufruftelegramm 5, um deren Existenz oder Funktionsfähigkeit zu ermitteln. Alle vorhandenen und funktionsfähigen Teilnehmer, in diesem Fall die Teilnehmer 2, 3 und 4, antworten mit einer Quittung als Antworttelegramm 13, 14 bzw. 15, um dies anzuzeigen. Die Quittungen müssen nacheinander eintreffen, damit sie sich nicht gegenseitig stören und der aufrufende Teilnehmer 1 die einzelnen Antworttelegramme 13, 14 und 15 unterscheiden kann. Daher werden Zeitfenster 10, 11 und 12 verwendet. Da beim erfindungsgemäßen Verfahren für die Erstellung eines Teilnehmerabbilds keine Einzelaufrufe für jeden einzelnen Teilnehmer erforderlich sind, wird das gesamte Teilnehmerabbild quasi zum selben Zeitpunkt erstellt. Das Teilnehmerabbild ist konsistent, da die Antworttelegramme in einem sehr kurzen Zeitraum eintreffen und sich der Zustand der Teilnehmer in dieser Zeit, beispielsweise durch Neuanschluß oder Ausfall eines Teilnehmers, wohl kaum ändern kann.

Im Beispiel nach Figur 2 soll geprüft werden, ob mehrere Teilnehmer die Busadresse 22 besitzen. Das Aufruftelegramm 16 enthält im Datenfeld als Merkmalsangabe diese Busadresse. Die beiden Teilnehmer 3 und 4 haben die Adresse 22 und antworten daher auf den Suchaufruf. Alle anderen Teilnehmer antworten nicht. In diesem Fall sind Überlappungen zugelassen, da lediglich interessiert, ob mehr als ein Teilnehmer antwortet. Falls Überlappungen zulässig sind, muß ein Eindeutigkeitskriterium vorhanden sein, das in den Antworttelegrammen mitgesendet wird und garantiert, daß sich die Antworttelegramme verschiedener aufgerufener Teilnehmer unterscheiden. Es muß somit die Eigenschaft haben, daß es bei allen beteiligten Teilnehmern unterschiedlich ist. Beispiele für derartige Eindeutigkeitskriterien sind:
- Seriennnummer,
- im System vergebene eindeutige Kennung der aufgerufenen Teilnehmer,
- ein besonderes, vom Anwender bestimmtes Kriterium und
- eine in den Teilnehmern erzeugte, quasi-eindeutige Zufallszahl mit großem Darstellungsbereich.

Auch Kombinationen der genannten Beispiele sind möglich. Damit ist es auch bei vollständiger Überlappung von zwei oder mehr Nachrichten zu erkennen, daß es sich um mehrere Antworten handelt, denn es gibt mindestens eine Stelle in der vom aufrufenden Teilnehmer 1 empfangenen Information, die sich bei einer Überlappung beispielsweise als Busstörung oder nichtidentifizierbares Telegramm bemerkbar macht.

## Patentansprüche

1. Verfahren zum Betreiben eines Datenübertragungssystems, insbesondere für eine speicherprogrammierbare Steuerung,
- mit einer Vielzahl von über eine gemeinsame Busleitung miteinander verbundenen Teilnehmern (1 ... 4), von denen sich zu einer bestimmten Zeit nur einer (1) im Besitz des Zugriffsrechts auf die Busleitung befindet und die Datenübertragung über die Busleitung mit Aufruftelegrammen (5), die gleichzeitig an mehrere andere Teilnehmer (2, 3, 4) gerichtet sind, steuert,
**dadurch gekennzeichnet,**
- daß die Reaktionszeit (7, 8, 9) jedes aufgerufenen Teilnehmers (2, 3, 4) ermittelt wird und die aufgerufenen Teilnehmer (2, 3, 4) derart parametriert werden, daß sie das Aufruftelegramm (5) in der Reihenfolge ihrer Reaktionszeiten zeitlich hintereinander quittieren oder beantworten, so daß der Teilnehmer (2) mit der kürzesten Reaktionszeit (7) als erster und der Teilnehmer (4) mit der längsten Reaktionszeit (9) als letzter auf den Bus zugreift.

2. Verfahren nach Anspruch 1, **dadurch gekennzeichnet,**
- daß in einer Initialisierungsphase jeder Teilnehmer (2, 3, 4) einzeln zur Ermittlung seiner Reaktionszeit (7, 8, 9) durch ein Aufruftelegramm aufgerufen wird.

3. Verfahren nach Anspruch 1 oder 2, **dadurch gekennzeichnet,**
- daß jedem aufgerufenen Teilnehmer (2, 3, 4) ein Zeitfenster (10, 11, 12) vorgegeben ist, durch das festgelegt wird, wann er nach dem Ende des Aufruftelegramms (5) auf den Bus zugreifen darf.

4. Verfahren nach Anspruch 3, **dadurch gekennzeichnet,**
- daß nach Verstreichen des letzten Zeitfensters (12), also nach Ablauf einer vorgegebenen Wartezeit (6) des aufrufenden Teilnehmers (1), geprüft wird, ob alle aufgerufenen Teilnehmer (2, 3, 4) das Aufruftelegramm (5) quittiert oder beantwortet haben und - falls nicht - eine Fehlerbehandlungsroutine eingeleitet wird.

5. Verfahren nach einem der vorhergehenden Ansprüche, **dadurch gekennzeichnet,**
- daß ein Teilnehmer (1) an alle anderen Teilnehmer (2, 3, 4) ein Suchaufruftelegramm (5, 16) sendet, das in seinen Daten eine Merkmalsangabe enthält, und alle anderen Teilnehmer (2, 3, 4), deren Merkmal (z. B. Busadresse, Seriennummer, Vorhandensein einer bestimmten Funktionalität, Hersteller) mit der Merkmalsangabe übereinstimmt, gleichzeitig oder zeitlich nacheinander den Suchaufruf beantworten.

6. Verfahren nach einem der vorhergehenden Ansprüche, **dadurch gekennzeichnet,**
- daß ein Teilnehmer (1) an alle anderen Teilnehmer (2, 3, 4) ein Aufruftelegramm (5) zur Erstellung eines Teilnehmerabbildes sendet und alle anderen Teilnehmer (2, 3, 4) zeitlich nacheinander dieses Aufruftelegramm quittieren und dadurch ihre Existenz und Funktionsfähigkeit anzeigen.

## Claims

1. Method for operating a data transmission system, in particular for a memory-programmable control,
- having a plurality of users (1 ... 4) connected to each other by way of a common bus line, of which at a certain time only one (1) is in possession of the access right to the bus line and controls the data transmission by way of the bus line with call messages (5) which are directed to several other users (2, 3, 4) simultaneously,
characterized in that
- the reaction time (7, 8, 9) of each called user (2, 3, 4) is determined and the called users (2, 3, 4) are parameterized in such a way that they acknowledge or respond to the call message (5) in the sequence of their reaction times temporally one after the other, so that the user (2) with the shortest reaction time (7) is the first to access the bus and the user (4) with the longest reaction time (9) is the last to access the bus.

2. Method according to claim 1, characterized in that in an initialization phase each user (2, 3, 4) is called individually by means of a call message for the determination of its reaction time (7, 8, 9).

3. Method according to claim 1 or 2, characterized in that a time window (10, 11, 12) is specified for each called user (2, 3, 4), by means of which time window it is established when the user may access the bus after the end of the call message (5).

4. Method according to claim 3, characterized in that after passing the last time window (12), that is to say after the expiration of a specified waiting time (6) of the calling user (1), it is examined whether all called users (2, 3, 4) have acknowledged or responded to the call message (5) and - if not - a fault control routine is introduced.

5. Method according to one of the preceding claims, characterized in that a user (1) transmits a search call message (5, 16) to all other users (2, 3, 4), which message contains a feature statement in its data, and all other users (2, 3, 4), the feature of which (for example bus address, serial number, presence of a certain functionality, manufacturer) corresponds with the feature statement, respond to the search call simultaneously or temporally one after the other.

6. Method according to one of the preceding claims, characterized in that a user (1) transmits to all other users (2, 3, 4) a call message (5) to provide a user image, and all other users (2, 3, 4) acknowledge this call message temporally one after the other and in this way display their existence and operability.

## Revendications

1. Procédé d'exploitation d'un système de transmission de données, notamment pour une commande par programme enregistré,
- comprenant plusieurs utilisateurs (1 à 4) reliés ensemble par l'intermédiaire d'une ligne de bus commune, parmi lesquels, à un instant donné, un seul (1) se trouve en possession du droit d'accès à la ligne de bus et commande la transmission de données par l'intermédiaire de la ligne de bus par des télégrammes d'appel (5) qui sont adressés simultanément à plusieurs autres utilisateurs (2, 3, 4),
caractérisé par le fait que
- on détermine le temps de réaction (7, 8, 9) de chaque utilisateur appelé (2, 3, 4) et on paramètre les utilisateurs appelés (2, 3, 4) de telle sorte qu'ils accusent réception ou répondent au télégramme d'appel (5) successivement dans le temps et dans l'ordre de leurs temps de réaction, l'utilisateur (2) ayant le temps de réaction (7) le plus court accédant le premier au bus et l'utilisateur (4) ayant le temps de réaction (9) le plus long accédant le dernier au bus.

2. Procédé selon la revendication 1, caractérisé par le fait que
- lors d'une phase d'initialisation, on appelle individuellement chaque utilisateur (2, 3, 4) au moyen d'un télégramme d'appel pour déterminer son temps de réaction (7, 8, 9).

3. Procédé selon la revendication 1 ou 2, caractérisé par le fait que
- on prescrit à chaque utilisateur appelé (2, 3, 4) une fenêtre temporelle (10, 11, 12) qui spécifie quand cet utilisateur a le droit d'accéder au bus après la fin du télégramme d'appel (5).

4. Procédé selon la revendication 3, caractérisé par le fait que
- après l'expiration de la dernière fenêtre temporelle (12), c'est-à-dire après l'écoulement d'un temps d'attente prescrit (6) de l'utilisateur appelant (1), on contrôle si tous les utilisateurs appelés (2, 3, 4) ont accusé réception du télégramme d'appel (5) ou y ont répondu et, si ce n'est pas le cas, on déclenche une routine de traitement d'erreur.

5. Procédé selon l'une des revendications précédentes, caractérisé par le fait que
- un utilisateur (1) envoie à tous les autres utilisateurs (2, 3, 4) un télégramme d'appel de recherche (5, 16) qui contient dans ses données une indication de caractéristique et tous les autres utilisateurs (2, 3, 4) dont la caractéristique (par exemple adresse de bus, numéro de série, présence d'une certaine fonctionnalité, fabricant) coïncide avec l'indication de caractéristique, répondent simultanément ou successivement dans le temps à l'appel de recherche.

6. Procédé selon l'une des revendications précédentes, caractérisé par le fait que
- un utilisateur (1) envoie à tous les autres utilisateurs (2, 3, 4) un télégramme d'appel (5) pour établir une image des utilisateurs et tous les autres utilisateurs (2, 3, 4) accusent réception successivement dans le temps de ce télégramme d'appel et indiquent ainsi leur existence et leur capacité à fonctionner.
